# EUROPEAN PATENT SPECIFICATION

(11) **EP 1 553 729 B1**
(45) Date of publication and mention of the grant of the patent: **29.11.2006**
(21) Application number: 05000083.5
(22) Date of filing: 04.01.2005
(51) Int. Cl.: H04L 12/28, H04L 12/24

(54) **Configuring of ad hoc wireless network devices using a portable media device**
Konfiguration von drahtlosen Ad-Hoc-Netzwerkgeräten mittels eines tragbaren Datenträgers
Configuration des dispositifs dans un réseau ad hoc sans fil utilisant des supports de données portables

(30) Priority: 07.01.2004 US 534795 P; 23.03.2004 US 806836
(43) Date of publication of application: 13.07.2005
(73) Proprietor: MICROSOFT CORPORATION, Redmond, WA 98054 (US)
(72) Inventor: Nick, Benjamin c/o Microsoft Corporation, Redmond WA 98052 (US); Duplessis, Jean-Pierre c/o Microsoft Corporation, Redmond WA 98052 (US); Manchester, Scott c/o Microsoft Corporation, Redmond WA 98052 (US)
(74) Representative: Grünecker, Kinkeldey, Stockmair & Schwanhäusser Anwaltssozietät

(56) References cited:
- WO-A-03/034686
- WO-A-03/092222
- US-A1- 2002 007 407
- US-A1- 2002 009 199
- CISCO: "Introduction to Design" CONFIGURATION SCENARIOS, 28 September 2002 (2002-09-28), pages 1-4, XP002320049

## Description

### FIELD OF THE INVENTION

This invention pertains generally to the field of computer networks, and more particularly to a mechanism for simplifying the process of configuring nodes in a wireless computer network.

### BACKGROUND OF THE INVENTION

The use of data communication networks continues to grow. In small and large corporate settings, wired local area networks (LANs) and wide area networks (WANs) have become an established feature of conducting business, and wireless networks are being increasingly employed. The use of network technology in the home, both wired and wireless, is a more recent phenomenon and has been slower to develop. In addition to facilitating Internet connectivity, home networking permits personal computing devices and various consumer electronic devices and appliances within the home to communicate with each other. Wireless technology, such as IEEE 802.11 wireless networks and networks of Bluetooth-enabled devices, is attractive in home as well as corporate environments for reasons of convenience, mobility and flexibility.

A principal impediment to the wider adoption of networking technology in the home and other non-corporate environments has been the difficulty experienced by non-expert users in configuring network devices. This is especially the case for setting up a secure ad hoc wireless networks. In ad hoc wireless network, peer wireless devices (such as wireless PCs, tablets, wireless printers, PDAs, etc.) communicate directly with each other without the use of a wireless access point (AP) or a wired network. An ad hoc wireless is very useful in many scenarios, especially when an infrastructure wireless network is not available. For instance, an ad hoc wireless can be formed at a conference for the participants to exchange documents, on a bus or in a park for one-on-one file exchange, or in a home with friends for playing video games. To ensure the privacy of the wireless communications, a security key, such as a Wired Equivalent Privacy (WEP) key, is used by the participants of the ad hoc wireless network for the wireless communications.

Setting up an ad hoc wireless network is, however, typically a complex task. Each peer device must have the same network settings, and a secure ad hoc network typically requires each peer device to have a common WEP key, which must be communicated to the user of the peer device and entered manually. Entering the network settings and the WEP key onto each of the peer devices can be tedious and prone to errors. For instance, a long WEP key (e.g., 104-bit long) composed of random letters may enhance the security of the wireless transmissions. Such a long key, however, will be difficult to transfer by a user and time consuming and difficult to enter into machine that is to join the wireless network.

WO 03/092222 relates to a communication system, an information processing apparatus and a method which enables communication settings to be performed through easy operations. This includes both a wireless communication system in the infrastructure mode and a wireless communication system in the ad hoc mode. Communication setting in the ad hoc mode is performed between two terminal apparatuses by putting a tag very close to an IC tag reader/writer of the first terminal apparatus. The IC tag reader/writer performs contactless communication with the tag and transmits the communication setting information to the tag. Thereafter, the user puts the tag very close to an IC tag reader/writer of the second terminal apparatus. The IC tag reader/writer of the second terminal apparatus receives the communication setting information stored in the tag. The second terminal apparatus stores the communication setting information and performs communication setting for performing wireless communication with the first terminal apparatus.

US 2002/007407 A1 relates to a technique for seamless connection of a single terminal to numerous different WLANs. A software implemented technique is described of configuring a computer to associate with a network through a wireless communication link. A user can enter encryption key values for several keys and select a key index which will be used while communicating on the network.

### BRIEF SUMMARY OF THE INVENTION

It is the object of the present invention to simplify the task of configuring network devices for setting up an ad hoc wireless network.

This object is solved by the invention as claimed in the independent claims.

Preferred embodiments are defined by the dependent claims.

In accordance with the invention, a computer-readable portable media device, such as a USB flash drive or an SD memory card, is used to simplify the task of configuring network devices for setting up an ad hoc wireless network. A configuration application aids the user in generating, wireless configuration settings, and the network encryption key may be automatically generated so that a user does not have to enter a lengthy encryption key manually. The configuration application then generates an Extensible Markup Language (XML) file embodying the wireless network settings and writes that file to the portable media device. A user may then install the portable media device in one or more other network devices to automatically transfer the configuration settings to those network devices to configure each of the wireless devices. As a result, a wireless device may be provisioned with the wireless configuration settings necessary to join a wireless network, without requiring the user to manually enter the network settings.

Additional features and advantages of the invention will be apparent from the following detailed description of illustrative embodiments which proceeds with reference to the accompanying figures.

### BRIEF DESCRIPTION OF THE DRAWINGS

While the appended claims set forth the features of the present invention with particularity, the invention and its advantages are best understood from the following detailed description taken in conjunction with the accompanying drawings, of which:

Figure 1 is a simplified schematic diagram illustrating an exemplary architecture of a computing device for carrying out the configuration of a computer network in accordance with an embodiment of the invention;

Figure 2 is a schematic diagram illustrating an ad hoc wireless network established in accordance with a method of the invention;

Figure 3 is a schematic diagram illustrating the use of a portable media device for transferring network settings for setting up a wireless device for joining an ad hoc wireless network;

Figures 4A-F are screenshots of a wizard application for generating network settings and storing the settings to a portable media device in accordance with an embodiment of the invention;

Figure 5 is a schematic diagram illustrating a software architecture for carrying out the configuration of a computer network in accordance with an embodiment of the invention;

Figure 6 is a flow diagram illustrating a method for creating an ad hoc network in accordance with an embodiment of the invention;

Figure 7 is a process diagram illustrating a method for configuring a wireless access point in accordance with an embodiment of the invention; and

Figure 8 is a schematic diagram showing a data structure having fields of an XML schema for representing wireless network configuration settings in accordance with an embodiment of the invention.

### DETAILED DESCRIPTION OF THE INVENTION

Methods and systems for configuring network devices for an ad hoc wireless network using a portable media device will now be described with respect to certain embodiments. The skilled artisan will readily appreciate that the methods and systems described herein are merely exemplary and that variations can be made without departing from the scope of the invention.

The present invention will be more completely understood through the following detailed description, which should be read in conjunction with the attached drawings. In this description, like numbers refer to similar elements within various embodiments of the present invention. The invention is illustrated as being implemented in a suitable computing environment. Although not required, the invention will be described in the general context of computer-executable instructions, such as procedures, being executed by a personal computer. Generally, procedures include program modules, routines, functions, programs, objects, components, data structures, etc. that perform particular tasks or implement particular abstract data types. Moreover, those skilled in the art will appreciate that the invention may be practiced with other computer system configurations, including hand-held devices, multiprocessor systems, and microprocessor-based or programmable consumer electronics devices. The invention may also be practiced in distributed computing environments where tasks are performed by remote processing devices that are linked through a communications network. In a distributed computing environment, program modules may be located in both local and remote memory storage devices. The term computer system may be used to refer to a system of computers such as may be found in a distributed computing environment.

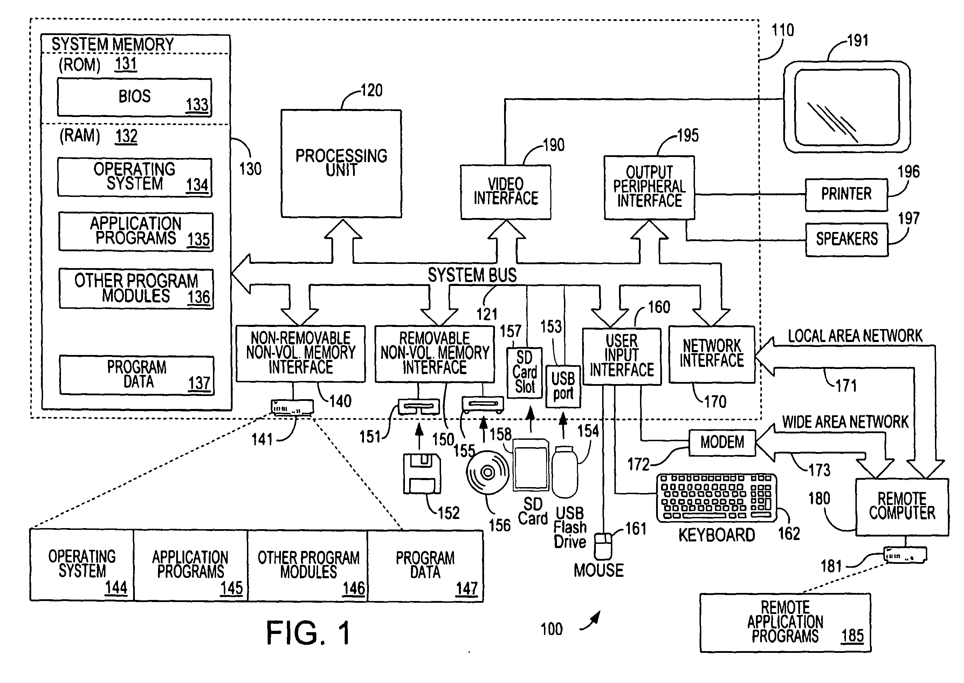

Figure 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100. Although at least one embodiment of the invention does include each component illustrated in the exemplary operating environment 100, another more typical embodiment of the invention excludes some or all non-essential components, for example, input/output devices other than those required for network communications.

With reference to Figure 1, an exemplary system for implementing the invention includes a general purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures.

The computer 110 typically includes a variety of computer-readable media. Computer-readable media can be any available media that can be accessed by the computer 110 and includes both volatile and nonvolatile media, and removable and nonremovable media. By way of example, and not limitation, computer-readable media may comprise computer storage media and communication media. Computer storage media includes volatile and nonvolatile, removable and nonremovable media implemented in any method or technology for storage of information such as computer-readable instructions, data structures, program modules or other data. Computer storage media includes, but is not limited to, RAM, ROM, EEPROM, flash memory or other memory technology, optical disk storage, magnetic cassettes, magnetic tape, magnetic disk storage or other magnetic storage devices, or any other medium which can be used to store the desired information and which can be accessed by the computer 110. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above are included within the scope of computer-readable media.

The system memory 130 includes computer storage media in the form of volatile and/or nonvolatile memory such as read only memory (ROM) 131 and random access memory (RAM) 132. By way of example, and not limitation, Figure 1 illustrates operating system 134, application programs 135, other program modules 136 and program data 137.

The computer 110 may also include other removable and nonremovable, volatile and nonvolatile computer storage media. By way of example only, Figure 1 illustrates a hard disk drive 141 that reads from or writes to nonremovable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CDROM. Other computer storage media that can be used in the exemplary operating environment include, but are not limited to, magnetic tape cassettes, flash memory cards, DVDs, digital video tape, solid state RAM, solid state ROM, and the like. The hard disk drive 141 is typically connected to the system bus 121 through a nonremovable memory interface such as interface 140, and magnetic disk drive 151 and optical disk drive 155 are typically connected to the system bus 121 by a removable memory interface, such as interface 150. The computer system may include of interfaces for additional types of removable nonvolatile storage devices. For instance, the computer may have a USB port 153 that can accept a USB flash drive (UFD) 154, or a SD card slot 157 that can accept a Secure Digital (SD) memory card 158. A USB flash drive is a flash memory device that is fitted with a USB connector that can be inserted into a USB port on various computing devices. A SD memory card is a stamp-sized flash memory device. Both the USB flash drive and SD card offer high storage capacity in a small package and high data transfer rates. Other types of removable storage media may also be used for implementing the invention.

The drives and their associated computer storage media, discussed above and illustrated in Figure 1, provide storage of computer-readable instructions, data structures, program modules and other data for the computer 110. In Figure 1, for example, hard disk drive 141 is illustrated as storing operating system 144, application programs 145, other program modules 146 and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies. A user may enter commands and information into the computer 110 through input devices such as a tablet, or electronic digitizer, 164, a microphone 163, a keyboard 162 and pointing device 161, commonly referred to as a mouse, trackball or touch pad. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 by way of an interface, such as a video interface 190. The monitor 191 may also be integrated with a touch-screen panel or the like. Note that the monitor and/or touch screen panel can be physically coupled to a housing in which the computing device 110 is incorporated, such as in a tablet-type personal computer. In addition, computers such as the computing device 110 may also include other peripheral output devices such as speakers 197 and printer 196, which may be connected through an output peripheral interface 194 or the like.

The computer 110 preferably operates or is adaptable to operate in a networked environment using logical connections to one or more remote computers, such as a remote computer 180. The remote computer 180 may be a personal computer, a server, a router, a peer device or other network node, and typically includes some or all of the elements described above relative to the computer 110, although only a memory storage device 181 has been illustrated in FIG. 1. The logical connections depicted in FIG. 1 include a LAN 171 and a WAN 173, but may also include other networks. For example, in the present invention, the computer 110 may comprise the source machine from which data is being migrated, and the remote computer 180 may comprise the destination machine. Note however that source and destination machines need not be initially connected by a network or otherwise, but instead, data may be migrated by way of any media capable of being written by the source platform and read by the destination platform or platforms. For example, one non-limiting instance of such a medium is a portable flash memory medium, sometimes referred to as a memory "key" or memory "stick." Other non-limiting examples will be given below.

When used in a LAN environment, the computer 110 is connectable to the LAN 171 through a network interface or adapter 170. The computer 110 may also include a modem 172 or other means for establishing communications over the WAN 173. The modem 172, which may be internal or external, may be connected to the system bus 121 by way of the user input interface 160 or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

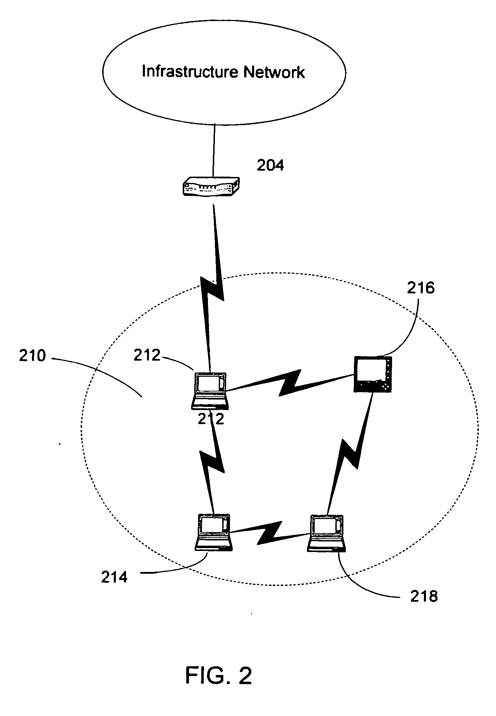

Turning to FIG. 2, the present invention is directed to a simple and convenient way for a user to set up a wireless ad hoc network, without having to go through the tedious and complex process of entering the network setting and security key into each of the wireless device joining the ad hoc network. As shown in FIG. 2, an ad hoc wireless network 210 may include a plurality of devices having the capability of wireless communications. The wireless devices may be of different types and having different levels of processing power. For instance, as shown in FIG. 2, the wireless devices include laptop (or notebook) PC's 212, 214, 216, a tablet computer 218. One of the wireless devices, such as the computer 212, in the ad hoc network may also communicate with an access point 204, thereby bridging the ad hoc wireless network with an infrastructure wireless network. In the ad hoc network 210, the wireless devices communicate with each other in a peer-to-peer fashion without the use of an access point. To form the ad hoc network 210, each wireless device has to be configured to have the settings and security key for the wireless network. Conventionally, setting up the wireless devices for participating in the ad hoc wireless network can be a very complex task, especially when a long security key has to be manually entered into each wireless device.

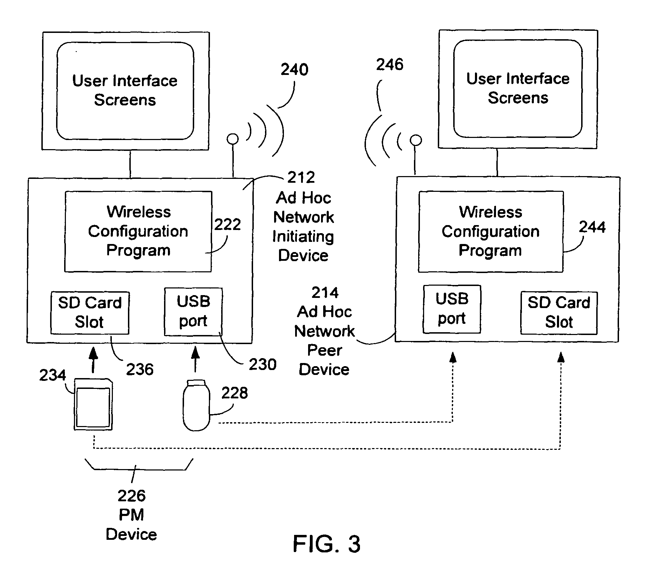

The present invention provides a way to establish a secure wireless ad hoc network that tremendously simplifies the task of setting up wireless devices for the network. Referring to FIG. 3, in accordance with the invention, a configuration program 222 on a first computer 212 is assists a user in generating the network settings and security key(s) for the wireless network. Once the settings are generated, they are stored on a portable media (PM) device 226 connected to the first computer 212. The portable media device may be, for example, a USB flash drive 228 that may be inserted into a USB port 230, or a SD memory card 234 that may be inserted into a SD card slot 236. It will be appreciated that the invention is not limited to these two portable memory media, and other types of portable memory media may be used for implementing the invention. For simplicity of illustration, the following description with describe an embodiment in which the portable media device used for setting up an ad hoc wireless device is a USB flash drive 228.

After the settings for the wireless network is stored on the portable media device 226, the portable media device is disconnected from the first computer 212 and used to transfer the wireless network settings to any other wireless device that wants to join the ad hoc wireless network. In a preferred embodiment, to set up a wireless device to join the wireless ad hoc network, all the user has to do is to connect the PORTABLE MEDIA to that wireless device, and the wireless network settings are automatically loaded into that device to enable it to start communicating with other wireless devices in the ad hoc wireless network. For example, in the example illustrated in FIG. 2, the settings for the wireless ad hoc network are defined on the first computer 212 and then transferred to the portable media device 226. The portable media device 226 is then connected to each of the notebook computers 214, 126, and the tablet computer 218 to transfer the network settings.

Referring back to FIG. 3, after the user has defined the network settings on the first computer, the wireless configuration program uses the settings to set up the first computer for the ad hoc network, and the first computer starts to transmit beacon signals 240 in the transmission band defined by the settings. When the portable media device 226 is connected to a second computer 214, the settings for the wireless ad hoc network are loaded into the second computer and used by a wireless configuration program 244 to set up the second computer to join the wireless network. After being configured for joining the wireless network 210, the second computer starts to send out beacon signals 246. Other computers accepting the portable media device 226 are similarly configured to communicate over the ad hoc wireless network 210. In this way, access to the ad hoc network 210 is generally limited to those computers that can physically attach the portable media device 226. Without the portable media device 226, a user would have to enter configuration settings - including the network name and any security keys - in order to access the wireless network 210. By attaching the portable media device 226, a computer is granted access to the wireless network 210 quickly and transparently.

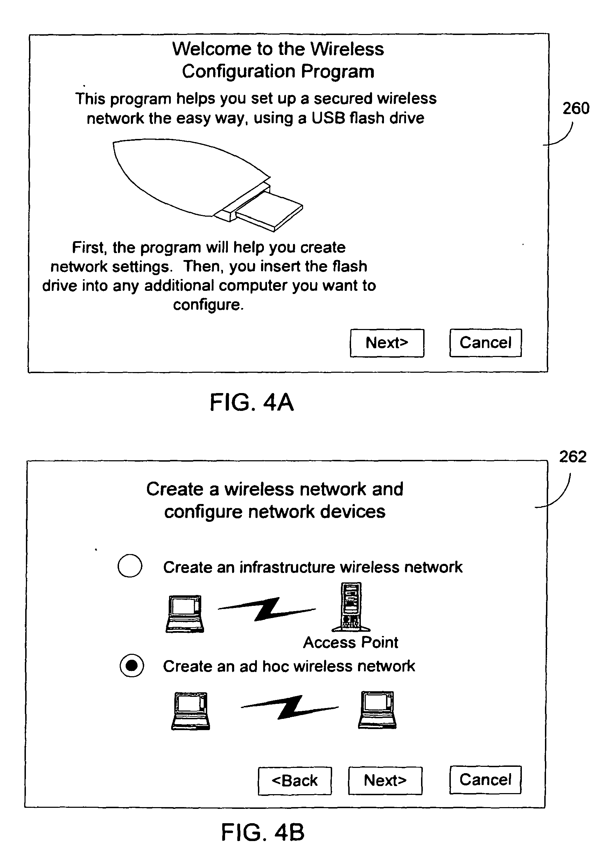

To further simply the task of setting up an ad hoc wireless network, the wireless configuration program provides a user interface to help a user to go through the steps of the process of defining the network settings and using the portable media device 226 to transfer the settings to other computers. Exemplary user interface screens are shown in FIGS. 4A-4F. For illustration purposes, the portable media device used in the example illustrated by these UI screens is a USB flash drive. In the user interface screen 260 illustrated in FIG. 4A, the user is informed that the configuration program will help the user create the settings for the wireless network, and then the settings will be saved on the USB flash drive and used to configure other computers or devices that are to join the wireless network. In the second UI screen 262 shown in FIG. 4B, the user are given the options of setting up an infrastructure wireless network and setting up an ad hoc wireless network, and the user selects to set up an ad hoc network.

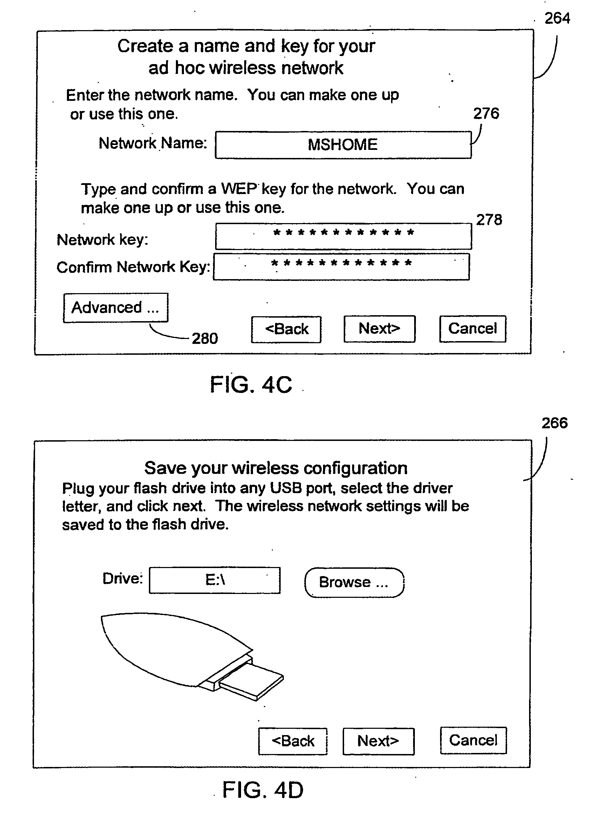

In the UI screen 264 shown in FIG. 4C, the user is presented with a field 276 for selecting a name for the wireless ad hoc network, and a field 278 for selecting a network key.
In one implementation, to minimize the work the user has to do, the configuration program may generate the network name and security key for the user, and the user may reject them and enter her own network name and key if she so desires. To that end, the name and key fields are initially filled by the wireless configuration program with values comprising either arbitrary data or data that is chosen using identifiers stored on the computer. For example, if the computer operating system has been registered to "John Smith", then the wireless configuration program can generate "JohnSmithsNetwork" as the default network name. The wireless configuration program may call a function of the operating system to generate a security key for the wireless network. The user can accept the network name and key suggested by the configuration program by clicking "Next", or can edit the fields manually. Additionally, by clicking an "Advanced" button 280, the user is permitted to edit a variety of other network configuration settings, which otherwise are automatically generated by the wireless configuration program. An advantage of providing a key generated by the computer is that the key is a full-sized key containing randomized letters. Such a key may provide enhanced security as compared to a user-entered key, which tends to be short and contain patterns that are easy for the user to memorize. Since the network settings, including the security key, are to be transferred to other computers by means of the portable media device, the user does not have try to create a key that she can remember and is more likely to use the key generated by the computer.

In the UI screen 266 shown in FIG. 4D, the wireless configuration program prompts the user to insert and identify a USB flash drive. When the user clicks "Next" on this screen to indicate that the USB flash drive has been inserted, the wireless configuration program stores the generated network settings for the wireless ad hoc network to the USB flash drive.

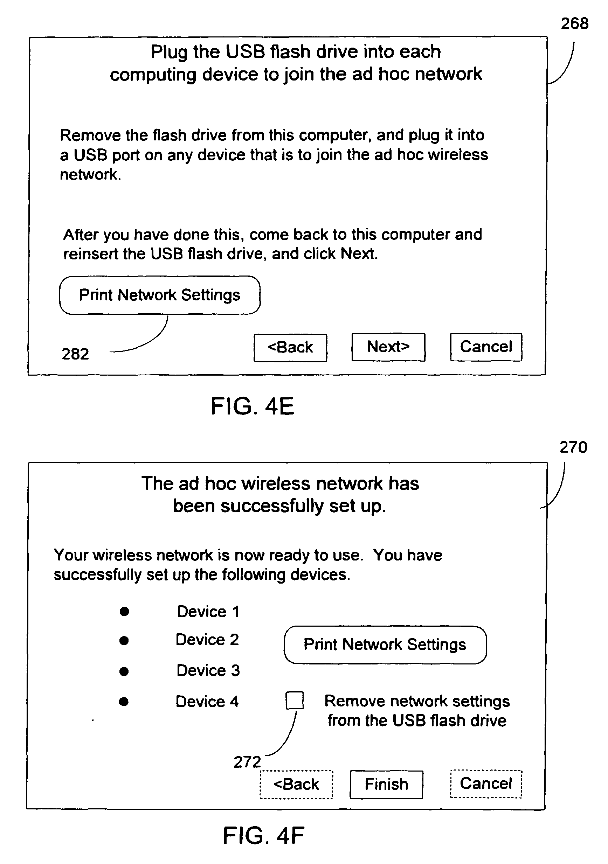

When the network settings have been completely stored on the USB flash drive, the user is presented with another UI screen 268 shown in FIG. 4E, prompting the user to remove the portable media device and plug it into all additional computing devices that are to join the ad hoc network. The UI screen 268 also presents the user with a "Print" button 282, allowing the user to print a hard copy of the network settings, which allows the user to manually configure those network devices that do not accept the portable media device or that cannot be automatically configured for the network.

When the user uses the USB flash drive to set up another computing device for the wireless network, the settings established on that device are written back onto the USB flash drive. After the user has used the USB flash drive to set up other computing devices for the ad hoc wireless network, she returns to the first computer 212 and inserts the USB flash drive in a USB port of the computer. The configuration program reads the setting data written by the other devices and presents a UI screen 270 as shown in FIG. 4F. The UI screen 270 identifies the devices that have been successfully set up for the wireless network. In addition, the configuration program presents the option of removing the settings from the USB flash drive. This prevents the network settings been inadvertently revealed to others when the USB flash drive is later used to transfer data to other computers. Since some users may have the tendency to use the same network name or key, this option of removing the network settings is provided to provide enhanced security.

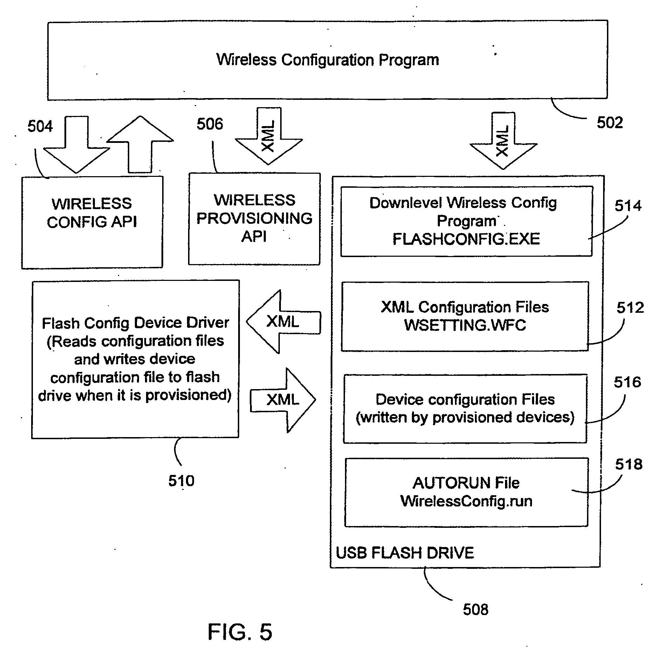

Turning now to FIG. 5, a software architecture used in an embodiment of the invention for generating and storing wireless network configuration settings is now described. A wireless configuration program 502 is executed on a computer and communicates with the computer through a wireless configuration application programming interface (API) 504 to generate wireless network configuration settings. In the Windows operating system environment of Microsoft Corporation, for example, the WZCDLG.DLL library can be used.

In accordance with a feature of the embodiment, the network settings for the wireless ad hoc network are stored in the format of an Extensible Markup Language (XML) file. The use of an XML file presents a standard format that can be recognized by many different devices. The wireless configuration program 502 outputs the XML files to the computer through a wireless provisioning API 506. The wireless configuration program 502 further outputs XML files for writing into an attached portable media device, such as a USB flash drive 508. To that end, a flash configuration device driver 510 reads configuration files and writes a device configuration file to the USB flash drive when it is provisioned.

The configuration program stores several files on the USB flash drive 508 for use in the network configuration process. In the embodiment illustrated in FIG. 5, the files include the XML files representing the generated network configuration settings. In one implementation, the XML files containing the network settings are give a special extension name such as "wfc" as shown in FIG. 5, to indicate that the files contain wireless configuration settings. Thus, when the USB flash drive is plugged into another computing device, the operating system of that device will recognize the files as containing wireless network setup information and will invoke the wireless configuration program on that device to handle the files. In addition, a network setup application 514 (called "Downlevel Wireless Config Program" in FIG. 5) may be stored on the USB flash drive 508 in order to facilitate the configuring of network settings for other devices. When the USB flash drive 508 is attached to another device, that device can run the network setup application to load the relevant network settings from the USB flash drive 508 to the other device. As also shown in FIG. 5, the USB flash drive 508 may be used to store device configuration files 516 that are written into the flash drive by devices that provisioned for the wireless network using the flash drive. In one implementation, each device configuration file is identified by a file name that contains the last 8 bytes of the MAC address of the provisioned device in ASCII-HEX format. This file name allows the computer on which the network settings are created to identify the provisioned device.

In an embodiment of the invention, the USB flash drive 508 further stores an autorun file, such as WirelessConfig.run 518. When the USB flash drive 508 is attached to a compatible device that recognizes the autorun file, the detection of WirelessConfig.run 518 automatically triggers the device to execute the network setup program 514. In this way, no user intervention is required to transfer the network settings to the device after the USB flash drive 508 has been attached.

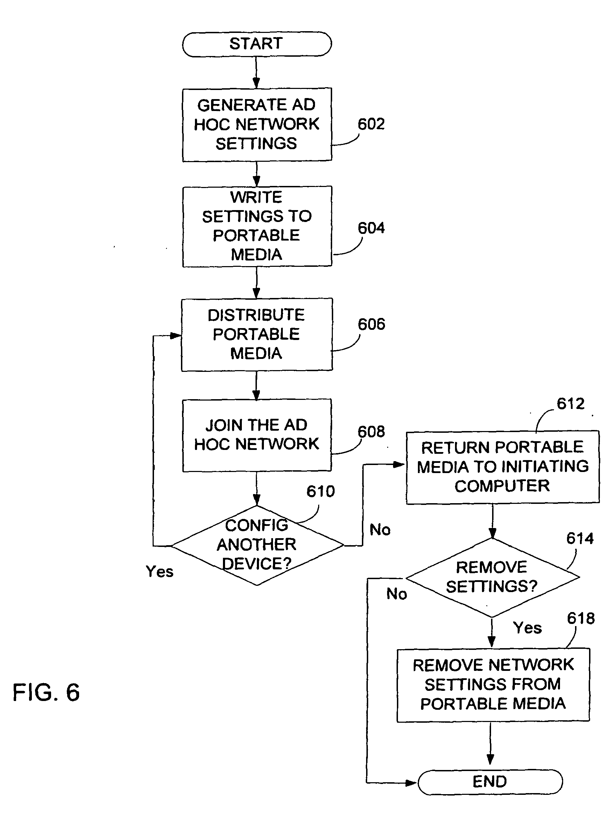

A method for using a portable media device to transfer network configuration settings to other devices for setting up an ad hoc wireless network in accordance with an embodiment of the invention is now described with reference to FIG. 6. An ad hoc network generally is of temporary duration and geography, for example, at an afternoon meeting of ten people in a conference room, or between two people on an airplane. The described method does not require users to know or enter either the name of the network or a security key, and it facilitates efficient creation of ad hoc networks. The method begins with generating network settings on an initiating computer for the ad hoc network at step 602. The network settings preferably include a Name string used to identify the network, such as an SSID string used during the 802.11 beaconing process, and a Pre-Shared Key string used for network authentication. Authentication types could include, for example, WEP, WPA PSK, or 802.11 i PSK encryption. The key format could be a binary or hexadecimal number, an alphanumeric string, or a keyword.

The settings are stored on a Portable media device, such as a USB flash drive, at step 604, using an XML schema or other suitable data format. XML provides a standard format for storing data such that devices of different manufacturers have a consistent way of parsing and consuming the data required in order to join the ad hoc network. By generating a large security key (such as a WEP key of 104 bits), the network settings stored on the PORTABLE MEDIA DEVICE can ensure that the ad hoc network is secure. The portable media device is then removed from the initiating computer and distributed to another device at step 606, which is set up and added to the ad hoc network at step 608 by attaching the portable media device to it. The device being provisioned uploads the stored network settings from the portable media device, selects the appropriate network, and performs necessary activities to participate in the ad hoc network, such as authentication and encryption. The provisioned device may also write its configuration data as a configuration log file 516 (see FIG. 5) onto the portable media device. In one embodiment, previously uploaded configuration settings are stored as multiple profiles. By using profiles, users can easily revert to previous network settings and switch to other networks without needing to obtain the network configuration settings again. The method continues with users deciding whether an additional device, such as a printer or another user's computer, is to be added to the ad hoc network at step 610. If so, the portable media device is distributed to the new device at step 606, which then joins the network at step 608. Any number of devices can be added to the ad hoc network in this manner. When all the devices joining the ad hoc wireless network have been configured, the portable media device is returned to the initiating computer at step 612. The configuration program on the initiating computer retrieves the configuration files of the provisioned devices from the portable media, and may display the settings of the provisioned devices for viewing by the user. In addition, the configuration program presents the option of removing the settings from the USB flash drive at step 614. In the UI screen 270 of FIG. 4F, this option is presented as a check box 272. If the user chooses that option, the configuration program deletes the network settings and the configuration log files from the portable media device at step 618. This prevents the network settings been inadvertently revealed to others when the USB flash drive is later used to transfer data to other computers. Since some users may have the tendency to use the same network name or key, this option of removing the network settings is provided to provide enhanced security.

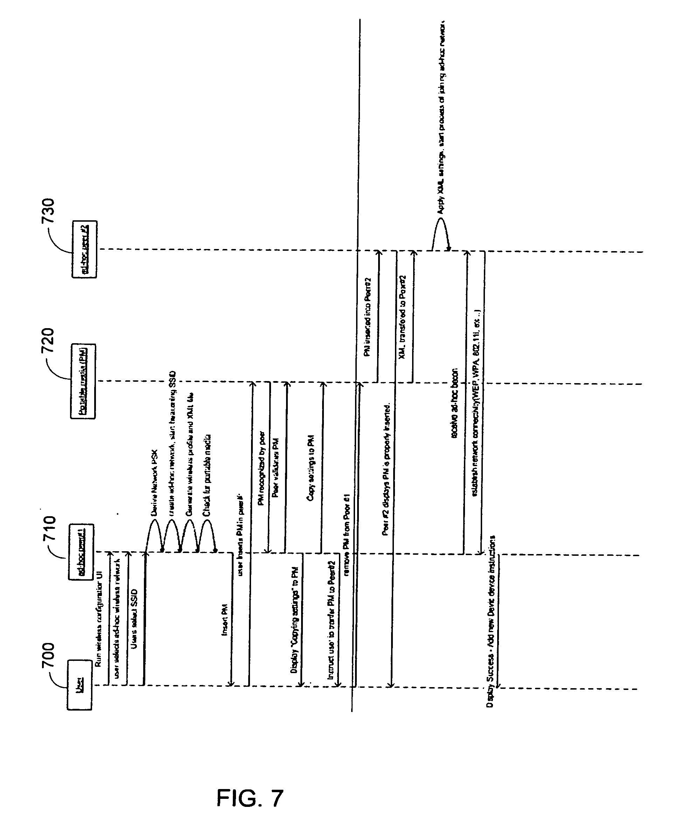

FIG. 7 presents an exemplary sequence of actions illustrating the generating and transferring of network configuration settings, by way of a portable media device, in order to create an ad hoc network. As illustrated in FIG. 7, a user 700 interacts with an initiating computer 710 to create the network settings. The settings are stored on a portable media device 720 as files in the XML format. The portable media device 720 is then used to configure another peer device of the wireless ad hoc network.

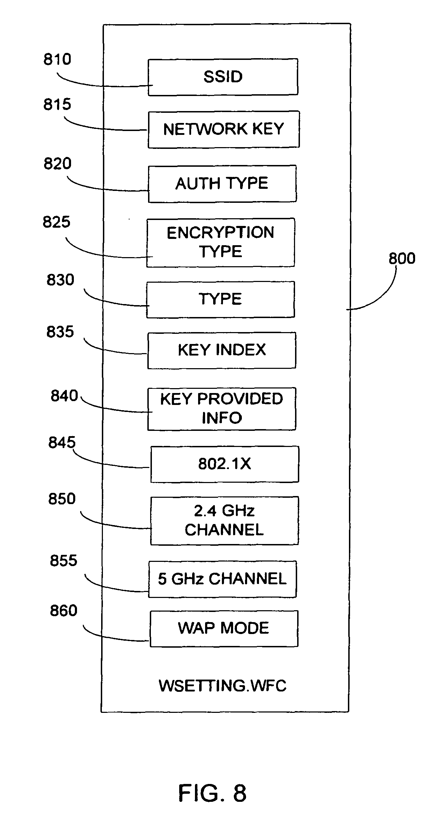

FIG. 8 illustrates a conceptualization of a schema 800 corresponding to the XML file used in an embodiment for storing the ad hoc wireless network settings on the portable media device. Each element of schema 800 represents a wireless configuration setting. Service set identifier (SSID) 810 is a 1-32 byte string representing the name of the wireless network. SSID 810 can only occur once. Network Key 815 is a string that the PC will automatically generate, or alternatively, receive from the PC user. The Network Key 815 is used for encryption on the wireless network. Authentication Type 820 indicates the authentication protocol used by the wireless network. Authentication Type 820 allows a range of possible values, including open, shared, WiFi Protected Access (WPA), WPA Pre-Shared Key (PSK), WPA-none, WPA2, or WPA2 PSK. Encryption Type 825 indicates the encryption protocol used by the wireless network. Encryption Type 825 allows a range of possible values, including none, Wireless Encryption Protocol Temporal Key Integrity Protocol (TKIP), and Advanced Encryption Standard (AES).

Type 830 indicates a connection type, and may have as its value either extended service set (ESS) in the case of an ad hoc network, or infrastructure basic service set (IBSS) in the case of an infrastructure network. Key Index 835 indicates the location of the specific key used to encrypt messages, and may have a value of 1, 2, 3, or 4. Key Index 835 is used with WEP. Key Provided Info 840 indicates whether a key is provided automatically, and can have a value of either 0 or 1. 802.1X 845 indicates whether IEEE 802.1X protocol is used on the network, and can have a value of either 0 or 1. 2.4 GHz Channel 850 indicates which 2.4 GHz Channel, if any, is being used by the wireless network, and can have a value in the range of 1 to 14. 5 GHz Channel 855 indicates which 5 GHz channel, if any, is being used by the wireless network, and can have a value of 36, 40, 44, 48, 52, 56, 60, 64, 149, 153, 157, or 161. WAP Mode 860 indicates the mode in which the wireless access point is operating. WAP Mode 860 can have a value of infrastructure, bridge, repeater, or station.

An exemplary XML schema is as follows:

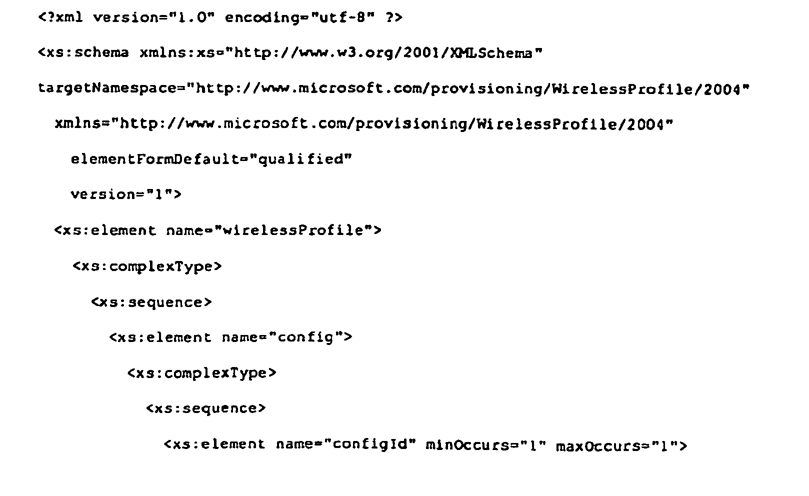

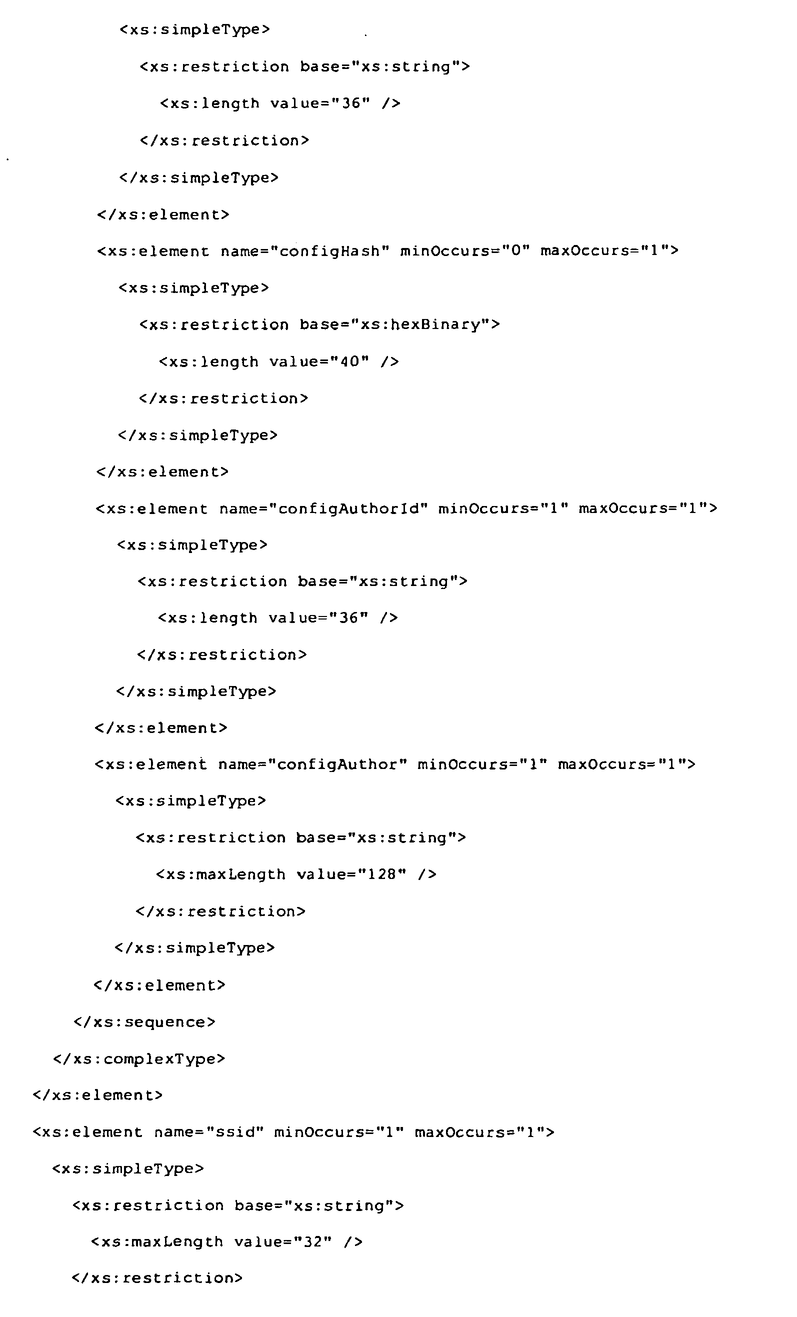

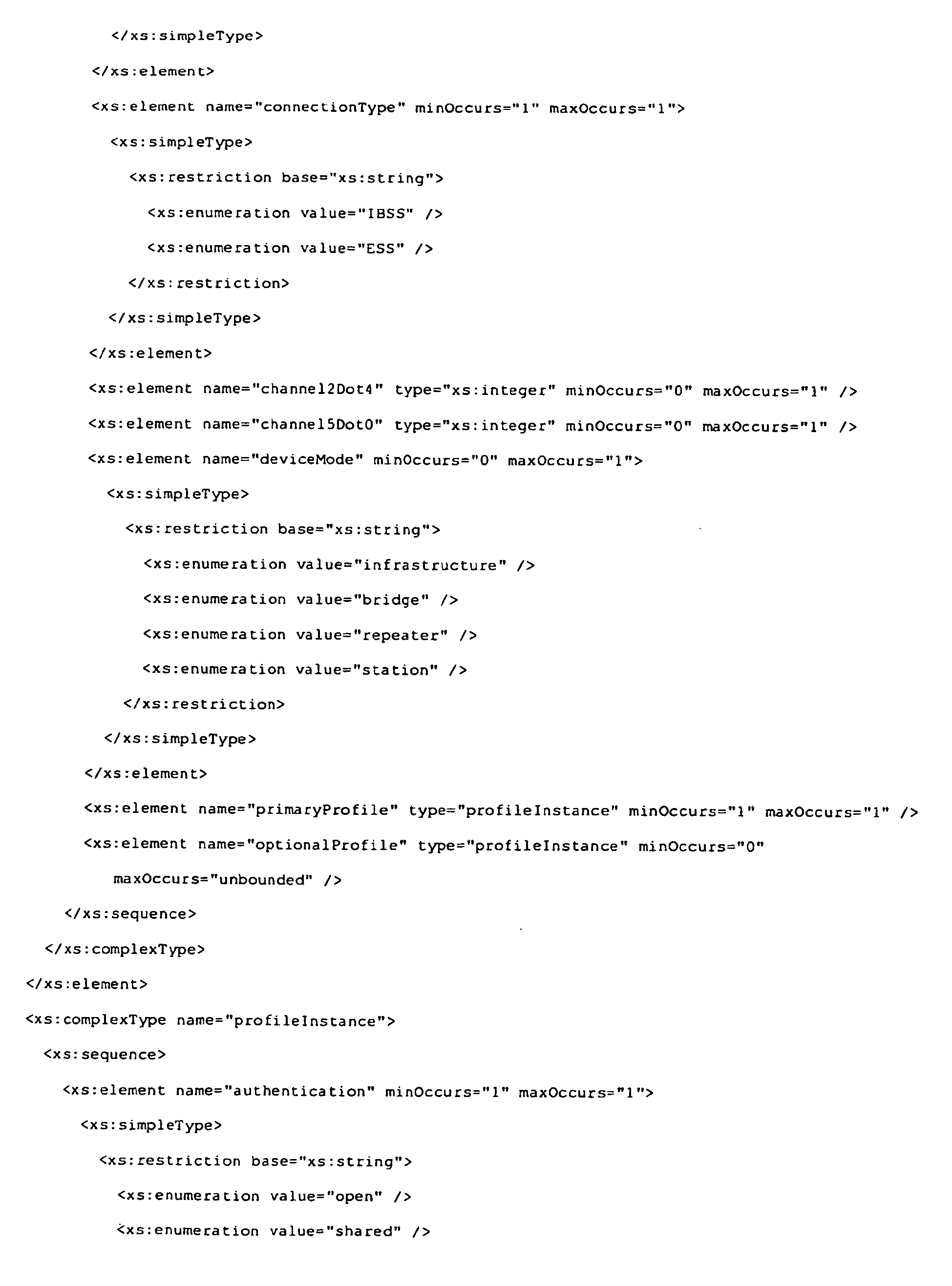

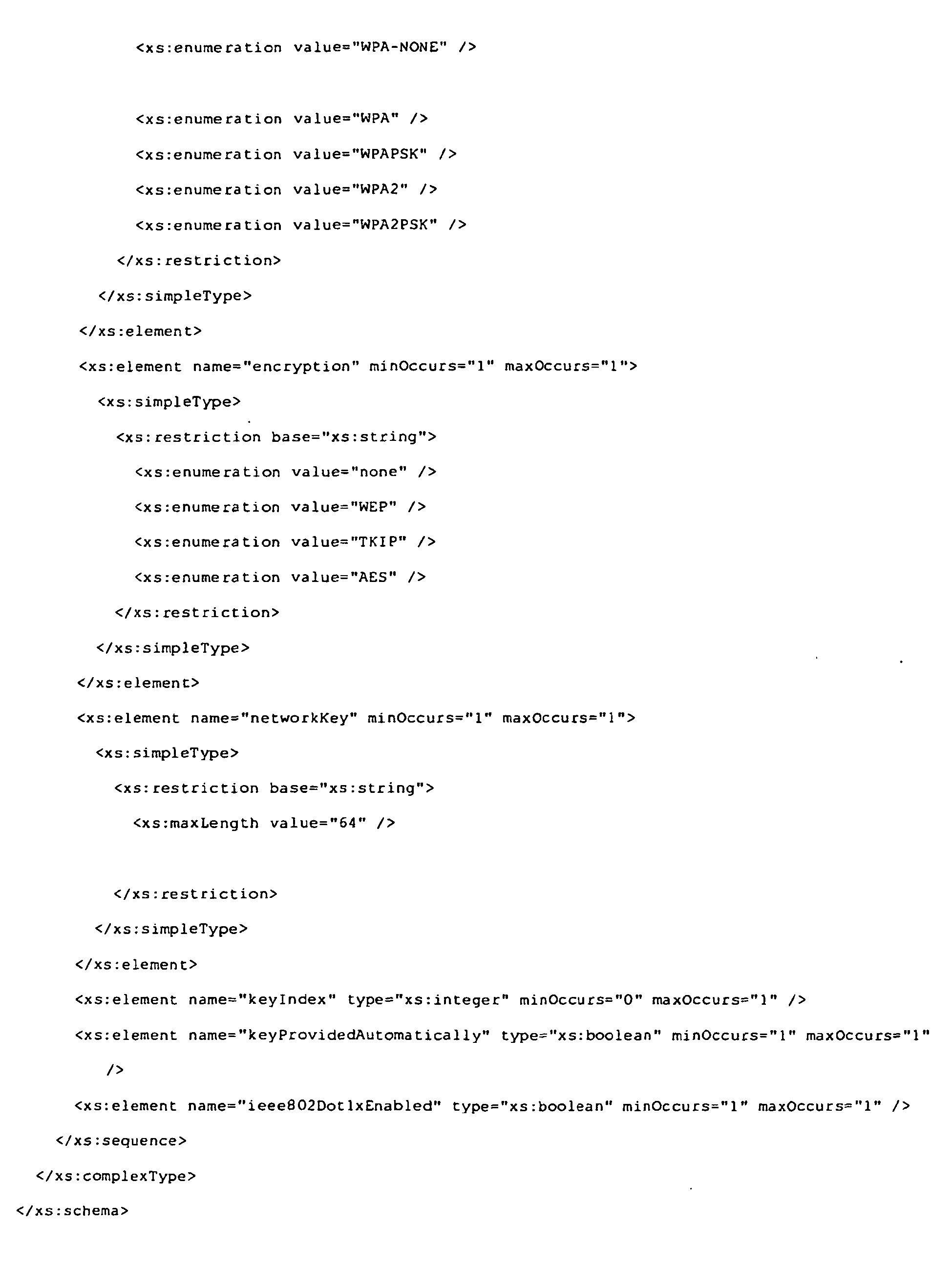

An exemplary instance of a WSETTINGS.XML file is set forth below. This instance was generated, for example, by the PC using the wireless configuration XML schema set forth immediately above.

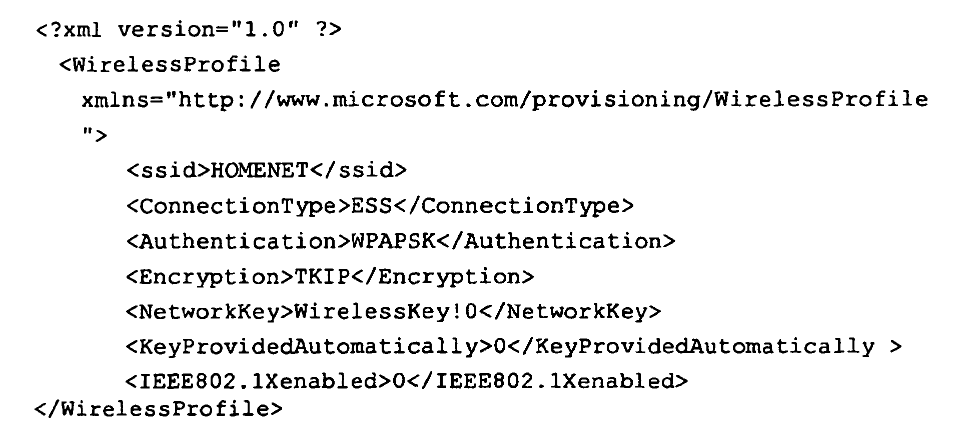

It will be appreciated that an improved system and method for wireless network device configuration have been disclosed herein. In view of the many possible embodiments to which the principles of the present invention may be applied, it should be recognized that the embodiments described herein with respect to the drawing figures are meant to be illustrative only and should not be taken as limiting the scope of the invention. Although the invention is described in terms of software modules or components, those skilled in the art will recognize that such may be equivalently replaced by hardware components. Therefore, the invention as described herein contemplates all such embodiments as may come within the scope of the following claims.

## Claims

1. A computer-readable medium having computer-executable instructions for performing steps for configuring wireless computing devices for forming an ad hoc wireless network (210), comprising:
prompting a user, through a user interface of an initiating computing device (212), to create (602) network settings for the ad hoc wireless network;
collecting the network settings for the ad hoc wireless network;
generating an Extensible Markup Language, XML, file including the network settings for the ad hoc wireless network;
writing (604) the XML file to a portable media device (226) connected to the initiating computing device;
instructing the user, through the user interface, to remove the portable media device from the initiating computing device and to connect the portable media device to a peer computing device (214) for configuring the peer computing device for joining (608) the ad hoc wireless network;
detecting reconnection of the portable media device to the initiating computing device; and
retrieving by the initiating computing device configuration data written by the peer computing device into the portable media device in connection with configuring the peer computing device for joining the ad hoc wireless network.

2. The computer-readable medium as in claim 1, wherein the step of collecting the network settings includes generating, by the initiating computing device, default values for selected network settings.

3. The computer-readable medium as in claim 2, wherein the step of generating default values includes invoking an application program interface, API, of an operating system of the initiating computing device to generate the default values for the selected network settings.

4. The computer-readable medium as in claim 2, wherein the step of collecting the network settings includes generating a network security key for the ad hoc wireless network.

5. The computer-readable medium as in claim 1, wherein the step of collecting the network settings includes receiving network setting data entered by the user.

6. The computer-readable medium as in claim 1, wherein joining the ad hoc wireless network includes:
detecting installation of the portable media device on the peer computing device, the portable media device containing the network settings for the ad hoc wireless network; and
automatically configuring the peer computing device for joining the ad hoc wireless network using the network settings contained in the portable media device.

7. The computer-readable medium as in claim 6, wherein the step of automatically configuring includes recognizing that the portable media device contains the network settings, and invoking a network configuration application to implement the network settings in the peer computing device.

8. The computer-readable medium as in claim 6, having further computer-executable instructions for performing the step of the peer computing device writing the configuration data.

9. The computer-readable medium as in one of claims 1 or 6, wherein the portable media device is a universal serial bus, USB, flash drive.

10. The computer-readable medium as in one of claims 1 or 6, wherein the portable media device is a flash memory card.

11. A method for configuring wireless computing devices for forming an ad hoc wireless network (210), comprising:
determining network settings for the ad hoc wireless network, the network settings including a network name (810) and a network security key (815) for the ad hoc wireless network;
generating an Extensible Markup Language, XML, file including the network settings for the ad hoc wireless network;
writing (604) the XML file to a portable media device (226), wherein the steps of determining, generating, and writing are performed on an initiating computing device (212) of the ad hoc wireless network;
connecting the portable media device to a peer computing device (214) for joining (608) the ad hoc wireless network;
detecting reconnection of the portable media device to the initiating computing device; and
retrieving by the initiating computing device configuration data written by the peer computing device into the portable media device in connection with configuring the peer computing device for joining the ad hoc wireless network.

12. The method as in claim 11, further including the step of:
executing a network configuration application on the peer computing device to automatically configure the peer computing device using the network settings in the XML file on the portable media device.

13. The method as in claim 11, wherein the step of determining includes generating by the initiating computing device a network security key for the ad hoc wireless network.

14. The method as in claim 11, wherein the step of determining includes prompting a user to enter a network security key for the ad hoc wireless network.

15. The method as in claim 11, wherein the step of determining includes invoking an application program interface, API, of an operating system of the initiating computing device to provide the network settings.

16. The method as in claim 11, wherein joining the ad hoc wireless network includes:
detecting installation of the portable media device on the peer computing device, the portable media device containing the network settings for the ad hoc wireless network; and
automatically configuring the peer computing device for joining the ad hoc wireless network using the network settings contained in the portable media device.

17. The method as in claim 16, wherein the step of automatically configuring includes recognizing that the portable media device contains the network settings, and invoking a network configuration application to implement the network settings in the peer computing device.

18. The method as in claim 16, further including the step of the peer computing device writing the configuration data.

19. The method as in one of claims 11 or 15, wherein the portable media device is a universal serial bus, USB, flash drive.

20. The method as in one of claims 11 or 15, wherein the portable media device is a flash memory card.

## Patentansprüche

1. Computerlesbares Medium, das computerausführbare Anweisungen enthält, um Schritte zum Konfigurieren von kabellosen Computergeräten auszuführen, um ein kabelloses Ad-Hoc-Netzwerk (210) zu bilden, umfassend:
Auffordern eines Benutzers mittels einer Benutzerschnittstelle eines initiierenden Computergeräts (212), Netzwerkeinstellungen für das kabellose Ad-Hoc-Netzwerk zu erstellen (602);
Sammeln der Netzwerkeinstellungen für das kabellose Ad-Hoc-Netzwerk;
Erzeugen einer Extensible Markup Language, XML, Datei, die die Netzwerkeinstellungen für das kabellose Ad-Hoc-Netzwerk beinhaltet;
Schreiben (604) der XML-Datei auf einen tragbaren Datenträger (226), der mit dem initiierenden Computergerät verbunden ist;
Anweisen des Benutzers mittels der Benutzerschnittstelle, den tragbaren Datenträger vom initiierenden Computergerät zu entfernen und den tragbaren Datenträger mit einem Peer-Computergerät (214) zu verbinden, um das Peer-Computergerät für einen Beitritt zum kabellosen Ad-Hoc-Netzwerk zu konfigurieren;
Erkennen einer Wiederverbindung des tragbaren Datenträgers mit dem initiierenden Computergerät; und
Abrufen von Konfigurationsdaten, die vom Peer-Computergerät auf den tragbaren Datenträger im Zusammenhang mit dem Konfigurieren des Peer-Computergeräts für den Beitritt zum kabellosen Ad-Hoc-Netzwerk geschrieben worden sind, durch das initiierende Computergerät.

2. Computerlesbares Medium nach Anspruch 1, wobei der Schritt des Sammelns der Netzwerkeinstellungen das Erzeugen von Default-Werten für ausgewählte Netzwerkeinstellungen durch das initiierende Computergerät beinhaltet.

3. Computerlesbares Medium nach Anspruch 2, wobei der Schritt des Erzeugens von Default-Werten das Aufrufen einer Anwendungsprogrammschnittstelle, API, eines Betriebssystems des initiierenden Computergeräts beinhaltet, um die Default-Werte für die ausgewählten Netzwerkeinstellungen zu erzeugen.

4. Computerlesbares Medium nach Anspruch 2, wobei der Schritt des Sammelns der Netzwerkeinstellungen das Erzeugen eines Netzwerksicherheitsschlüssels für das kabellose Ad-Hoc-Netzwerk beinhaltet.

5. Computerlesbares Medium nach Anspruch 1, wobei der Schritt des Sammelns der Netzwerkeinstellungen das Empfangen von Netzwerkeinstellungsdaten beinhaltet, die von einem Benutzer eingegeben worden sind.

6. Computerlesbares Medium nach Anspruch 1, wobei der Beitritt zum kabellosen Ad-Hoc-Netzwerk beinhaltet:
Erkennen der Installation des tragbaren Datenträgers auf dem Peer-Computergerät, wobei der tragbare Datenträger die Netzwerkeinstellungen für das kabellose Ad-Hoc-Netzwerk enthält; und
Automatisches Konfigurieren des Peer-Computergeräts für den Beitritt zum kabellosen Ad-Hoc-Netzwerk unter Verwendung der im tragbaren Datenträger enthaltenden Netzwerkeinstellungen.

7. Computerlesbares Medium nach Anspruch 6, wobei der Schritt des automatischen Konfigurierens das Erkennen, dass der tragbare Datenträger die Netzwerkeinstellungen enthält, und das Aufrufen einer Netzwerkkonfigurationsanwendung zum Implementieren der Netzwerkeinstellungen im Peer-Computergerät beinhaltet.

8. Computerlesbares Medium nach Anspruch 6 mit weiteren computerausführbaren Anweisungen, um den Schritt durchzuführen, dass das Peer-Computergerät die Konfigurationsdaten schreibt.

9. Computerlesbares Medium nach einem der Ansprüche 1 oder 6, wobei der tragbare Datenträger ein USB-Flash-Laufwerk ist.

10. Computerlesbares Medium nach einem der Ansprüche 1 oder 6, wobei der tragbare Datenträger eine Flash-Speicherkarte ist.

11. Ein Verfahren zum Konfigurieren kabelloser Computergeräte zur Bildung eines kabellosen Ad-Hoc-Netzwerks (210), umfassend:
Bestimmen von Netzwerkeinstellungen für das kabellose Ad-Hoc-Netzwerk, wobei die Netzwerkeinstellungen einen Netzwerknamen (810) und einen Netzwerksicherheitsschlüssel (815) für das kabellose Ad-Hoc-Netzwerk beinhalten;
Erzeugen einer Extensible Markup Language, XML, Datei, die die Netzwerkeinstellungen für das kabellose Ad-Hoc-Netzwerk beinhaltet;
Schreiben (604) der XML-Datei auf einen tragbaren Datenträger (226), wobei die Schritte des Bestimmens, des Erzeugens und des Schreibens auf einem initiierenden Computergerät (212) des kabellosen Ad-Hoc-Netzwerks durchgeführt werden;
Verbinden des tragbaren Datenträgers mit einem Peer-Computergerät (214) für einen Beitritt (608) zum kabellosen Ad-Hoc-Netzwerk;
Erkennen einer Wiederverbindung des tragbaren Datenträgers mit dem initiierenden Computergerät; und
Abrufen von Konfigurationsdaten, die vom Peer-Computergerät auf den tragbaren Datenträger im Zusammenhang mit dem Konfigurieren des Peer-Computergeräts für den Beitritt zum kabellosen Ad-Hoc-Netzwerk geschrieben worden sind, durch das initiierende Computergerät.

12. Verfahren nach Anspruch 11, ferner den Schritt beinhaltend:
Ausführen einer Netzwerkkonfigurationsanwendung auf dem Peer-Computergerät um das Peer-Computergerät automatisch unter Verwendung der Netzwerkeinstellungen in der XML-Datei auf dem tragbaren Datenträger zu konfigurieren.

13. Verfahren nach Anspruch 11, wobei der Schritt des Bestimmens das Erzeugen eines Netzwerksicherheitsschlüssels für das kabellose Ad-Hoc-Netzwerk durch das initiierende Computergerät beinhaltet.

14. Verfahren nach Anspruch 11, wobei der Schritt des Bestimmens das Auffordern eines Benutzers zur Eingabe eines Netzwerksicherheitsschlüssels für das kabellose Ad-Hoc-Netzwerk beinhaltet.

15. Verfahren nach Anspruch 11, wobei der Schritt des Bestimmens das Aufrufen einer Anwendungsprogrammschnittstelle, API, eines Betriebsystems des initiierenden Computergeräts beinhaltet, um die Netzwerkeinstellungen bereitzustellen.

16. Verfahren nach Anspruch 11, wobei der Beitritt zum kabellosen Ad-Hoc-Netzwerk beinhaltet:
Erkennen der Installation des tragbaren Datenträgers auf dem Peer-Computergerät, wobei der tragbare Datenträger die Netzwerkeinstellungen für das kabellose Ad-Hoc-Netzwerk enthält; und
Automatisches Konfigurieren des Peer-Computergeräts für den Beitritt zum kabellosen Ad-Hoc-Netzwerk unter Verwendung der im tragbaren Datenträger enthaltenden Netzwerkeinstellungen.

17. Verfahren nach Anspruch 16, wobei der Schritt des automatischen Konfigurierens das Erkennen, dass der tragbare Datenträger die Netzwerkeinstellungen enthält, und das Aufrufen einer Netzwerkkonfigurationsanwendung zum Implementieren der Netzwerkeinstellungen im Peer-Computergerät beinhaltet.

18. Verfahren nach Anspruch 16 ferner den Schritt beinhaltend, dass das Peer-Computergerät die Konfigurationsdaten schreibt.

19. Verfahren nach einem der Ansprüche 11 oder 15, wobei der tragbare Datenträger ein USB-Flash-Laufwerk ist.

20. Verfahren nach einem der Ansprüche 11 oder 15, wobei der tragbare Datenträger eine Flash-Speicherkarte ist.

## Revendications

1. Support lisible par ordinateur comportant des instructions exécutables par ordinateur pour effectuer des étapes pour configurer des dispositifs informatiques sans fil pour former un réseau sans fil ad hoc (210), comprenant les étapes consistant à :
inviter un utilisateur, par l'intermédiaire d'une interface utilisateur d'un dispositif informatique d'amorçage (212), à créer (602) des paramétrages de réseau pour le réseau sans fil ad hoc ;
recueillir les paramétrages de réseau pour le réseau sans fil ad hoc ;
produire un fichier en langage de balisage extensible, XML, comprenant les paramétrages de réseau pour le réseau sans fil ad hoc ;
écrire (604) le fichier XML sur un dispositif à support de données portatif (226) relié au dispositif informatique d'amorçage ;
ordonner à l'utilisateur, par l'intermédiaire de l'interface utilisateur, d'enlever le dispositif à support de données portatif du dispositif informatique d'amorçage et de relier le dispositif à support de données portatif à un dispositif informatique homologue (214) pour configurer le dispositif informatique homologue pour joindre (608) le réseau sans fil ad hoc ;
détecter la reconnexion du dispositif à support de données portatif au dispositif informatique d'amorçage ; et
retrouver, par le dispositif informatique d'amorçage, les données de configuration écrites par le dispositif informatique homologue dans le dispositif à support de données portatif en relation avec la configuration du dispositif informatique homologue pour joindre le réseau sans fil ad hoc.

2. Support lisible par ordinateur selon la revendication 1, dans lequel l'étape de collecte des paramétrages de réseau comprend la production, par le dispositif informatique d'amorçage, de valeurs par défaut pour des paramétrages de réseau sélectionnés.

3. Support lisible par ordinateur selon la revendication 2, dans lequel l'étape de production de valeurs par défaut comprend l'invocation d'une interface de programme d'application, API, d'un système d'exploitation du dispositif informatique d'amorçage pour produire les valeurs par défaut pour les paramétrages de réseau sélectionnés.

4. Support lisible par ordinateur selon la revendication 2, dans lequel l'étape de collecte des paramétrages de réseau comprend la production d'une clé de sécurité de réseau pour le réseau sans fil ad hoc.

5. Support lisible par ordinateur selon la revendication 1, dans lequel l'étape de collecte des paramétrages de réseau comprend la réception de données de paramétrage de réseau entrées par l'utilisateur.

6. Support lisible par ordinateur selon la revendication 1, dans lequel la jonction au réseau sans fil ad hoc comprend les étapes consistant à :
détecter l'installation du dispositif à support de données portatif sur le dispositif informatique homologue, le dispositif à support de données portatif contenant les paramétrages de réseau pour le réseau sans fil ad hoc ; et
configurer automatiquement le dispositif informatique homologue pour joindre le réseau sans fil ad hoc en utilisant les paramétrages de réseau contenus dans le dispositif à support de données portatif.

7. Support lisible par ordinateur selon la revendication 6, dans lequel l'étape de configuration automatique comprend la reconnaissance que le dispositif à support de données portatif contient les paramétrages de réseau, et l'invocation d'une application de configuration de réseau pour mettre en oeuvre les paramétrages de réseau dans le dispositif informatique homologue.

8. Support lisible par ordinateur selon la revendication 6, comportant en outre des instructions exécutables par ordinateur pour effectuer l'étape dans laquelle le dispositif informatique homologue écrit les données de configuration.

9. Support lisible par ordinateur selon l'une des revendications 1 ou 6, dans lequel le dispositif à support de données portatif est un lecteur flash à bus série universel de type USB.

10. Support lisible par ordinateur selon l'une des revendications 1 ou 6, dans lequel le dispositif à support de données portatif est une carte mémoire flash.

11. Procédé pour configurer des dispositifs informatiques sans fil pour former un réseau sans fil ad hoc (210), comprenant les étapes consistant à :
déterminer des paramétrages de réseau pour le réseau sans fil ad hoc, les paramétrages de réseau comprenant un nom de réseau (810) et une clé de sécurité de réseau (815) pour le réseau sans fil ad hoc ;
produire un fichier en langage de balisage extensible, XML, comprenant les paramétrages de réseau pour le réseau sans fil ad hoc ;
écrire (604) le fichier XML dans un dispositif à support de données portatif (226), dans lequel les étapes de détermination, de production et d'écriture sont effectuées sur un dispositif informatique d'amorçage (212) du réseau sans fil ad hoc ;
connecter le dispositif à support de données portatif à un dispositif informatique homologue (214) pour joindre (608) le réseau sans fil ad hoc ;
détecter la reconnexion du dispositif à support de données portatif au dispositif informatique d'amorçage ; et
retrouver, par le dispositif informatique d'amorçage, les données de configuration écrites par le dispositif informatique homologue dans le dispositif à support de données portatif en relation avec la configuration du dispositif informatique homologue pour joindre le réseau sans fil ad hoc.

12. Procédé selon la revendication 11, comprenant en outre l'étape consistant à :
exécuter une application de configuration de réseau sur le dispositif informatique homologue pour configurer automatiquement le dispositif informatique homologue en utilisant les paramétrages de réseau dans le fichier XML sur le dispositif à support de données portatif.

13. Procédé selon la revendication 11, dans lequel l'étape de détermination comprend la production par le dispositif informatique d'amorçage d'une clé de sécurité de réseau pour le réseau sans fil ad hoc.

14. Procédé selon la revendication 11, dans lequel l'étape de détermination comprend l'invitation d'un utilisateur à entrer une clé de sécurité de réseau pour le réseau sans fil ad hoc.

15. Procédé selon la revendication 11, dans lequel l'étape de détermination comprend l'invocation d'une interface de programme d'application, API, d'un système d'exploitation du dispositif informatique d'amorçage pour fournir les paramétrages de réseau.

16. Procédé selon la revendication 11, dans lequel la jonction au réseau sans fil ad hoc comprend les étapes consistant à :
détecter l'installation du dispositif à support de données portatif sur le dispositif informatique homologue, le dispositif à support de données portatif contenant les paramétrages de réseau pour le réseau sans fil ad hoc ; et
configurer automatiquement le dispositif informatique homologue pour joindre le réseau sans fil ad hoc en utilisant les paramétrages de réseau contenus dans le dispositif à support de données portatif.

17. Procédé selon la revendication 16, dans lequel l'étape de configuration automatique comprend la reconnaissance que le dispositif à support de données portatif contient les paramétrages de réseau, et l'invocation d'une application de configuration de réseau pour mettre en oeuvre les paramétrages de réseau dans le dispositif informatique homologue.

18. Procédé selon la revendication 16, comprenant en outre l'étape dans laquelle le dispositif informatique homologue écrit les données de configuration.

19. Procédé selon l'une des revendications 11 ou 15, dans lequel le dispositif à support de données portatif est un lecteur flash à bus série universel de type USB.

20. Procédé selon l'une des revendications 11 ou 15, dans lequel le dispositif à support de données portatif est une carte mémoire flash.
